# EUROPEAN PATENT APPLICATION

(11) **EP 2 568 411 A1**
(43) Date of publication of application: **13.03.2013**
(21) Application number: 11777142.8
(22) Date of filing: 23.04.2011
(51) Int. Cl.: G06K 7/00

(54) **EXTERNAL DEVICE OF CARD READER AND CARD READER**

(30) Priority: 04.05.2010 CN 201020179122 U
(71) Applicant: Huawei Device Co., Ltd., Shenzhen, Guangdong 518129 (CN)
(72) Inventor: BAI, Zhidong, Shenzhen Guangdong 518129 (CN); WANG, Rongjiang, Shenzhen Guangdong 518129 (CN)
(74) Representative: Epping - Hermann - Fischer
(86) International application number: PCT/CN2011/073221
(87) International publication number: WO 2011/137721

(57) **Abstract**

The present invention has provided an external device of a card reader and a card reader, which relate to the communication field. The embodiments of the present invention can automatically transmit data in the memory card to a data receiving apparatus through a control module. The control module can be provided either within the card reader or within an external device of the card reader. The external device of the card reader can be provided between the card reader and the data receiving apparatus. The external device of the card reader and the card reader in the embodiments of the present invention can automatically transmit data in the memory card to the data receiving apparatus and improve user experience. Moreover, the card reader in the embodiment of the present invention can be obtained by improving the existing card reader and external device without increasing too much cost.

## Description

### FIELD OF THE INVENTION

The present invention relates to communication field, in particular to an external device of a card reader and a card reader.

### BACKGROUND OF THE INVENTION

In the prior art, most of the electronic products such as a digital camera, a digital video camera, a mobile terminal, and a MP3 use a memory card for data storage. In the prior art, an external port of the electronic product may be connected with a computer or the like. Also, the memory card may be taken out and placed in a card reader, and then the card reader is connected with the computer or the like. The existing card reader generally has a USB interface and an interface configured to the memory card. In connection, the memory card is connected with the card reader, and the USB interface of the card reader is connected with the computer or the like.

In implementing the present invention, the inventor has found at least the following problems in the prior art:

The existing card reader simply serves as a conversion interface between the memory card and the computer or the like, and requires complicated manual operations such as file transfer, which is difficult for those users who are unfamiliar with the computer. For users who often need to transfer data, e.g., a photographer, frequent data transfer is also troublesome. Therefore, the existing data card causes inconveniences for the users and results in a bad user experience.

### SUMMARY OF THE INVENTION

In order to solve the problem in the prior art, i.e., the card reader only has a connection function which causes inconveniences for the user, the embodiments of the present invention provide an external device of a card reader and a card reader. The technical solution is as follows.

The embodiments of the present invention provide an external device of a card reader, the external device is communicatively connected with the card reader and a data receiving apparatus respectively, the external device including:
a first interface module, configured to connect with a data transmission interface of the card reader;
a second interface module, configured to connect with the data receiving apparatus;
a control module, the control module being electrically connected with the first interface module and the second interface module respectively, to read data of a memory card of the data reader according to the first interface module, and to transmit the data to the data receiving apparatus according to the second interface module.

The embodiments of the present invention also provide a card reader. The card reader is communicatively connected with a memory card and a data receiving apparatus, the card reader including:
a third interface module, configured to connect with the memory card;
a fourth interface module, configured to connect with the data receiving apparatus;
the card reader further comprises:
   a control module, the control module being electrically connected with the third interface module and the fourth interface module respectively, to read data stored in the memory card according to the third interface module and to transmit the data to the data receiving apparatus according to the fourth interface module.

The technical solutions provided by the embodiments of the present invention have the following beneficial effects: the external device of the card reader and card reader of the embodiments of the present invention transmit data in the memory card to the data receiving apparatus according to the control module, and thus the data in the memory card may be automatically transmitted to the data receiving apparatus and the user experience is improved.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are some embodiments of the present invention, and persons skilled in the art may derive other drawings from the accompanying drawings without creative efforts.

FIG. 1 is a schematic diagram of architecture of the external device according to Embodiment 1 of the present invention;

FIG. 2 is a schematic diagram of architecture of the external device according to Embodiment 2 of the present invention;

FIG. 3 is a schematic diagram of architecture of a button of the external device;

FIG. 4 is a schematic diagram of architecture of another button of the external device;

FIG. 5 is a schematic diagram of architecture of the card reader according to Embodiment 3 of the present invention;

FIG. 6 is a schematic diagram of architecture of the card reader according to Embodiment 2 of the present invention;

FIG. 7 is a schematic diagram of architecture of a button of the card reader; and

FIG. 8 is a schematic diagram of architecture of another button of the card reader.

### DETAILED DESCRIPTION OF THE EMBODIMENTS

In order to make the object, the technical solution and the advantages of the present invention clearer, the embodiments of the present invention will be further described in details by referring to the accompanying drawings.

### Embodiment 1

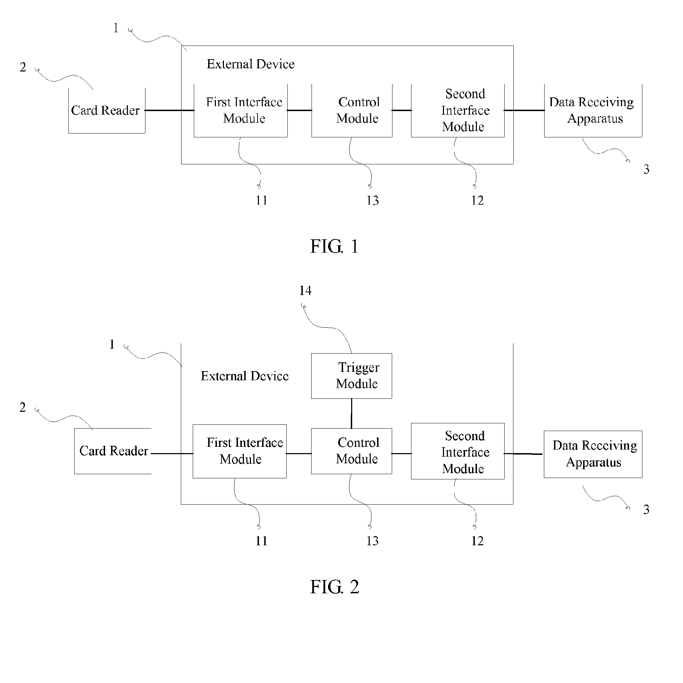

The first embodiment of the present invention has provided an external device 1 of a card reader, and its architecture is as shown in FIG. 1. The external device 1 is communicatively connected with a card reader 2 and a data receiving apparatus 3 respectively, and the external device 1 includes:
a first interface module 11, configured to connect with a data transmission interface of the card reader 2;
a second interface module 12, configured to connect with the data receiving apparatus 3;
a control module 13, the control module 13 being electrically connected with the first interface module 11 and the second interface module 12 respectively, to read data of a memory card of the data reader 2 according to the first interface module 11, and to transmit the data to the data receiving apparatus 3 according to the second interface module 12. In this embodiment, the memory card is inserted in the card reader 2.

The external device of the card reader in the embodiment of the present invention transmits data in the memory card to the data receiving apparatus according to the control module, and the external device of the card reader may be provided between the card reader and the data receiving apparatus. The card reader in the prior art only has a simple connection function, and thus the user has to control data transmission of the card reader according to a computer, resulting in a bad experience for those users who are unfamiliar with the computer and those users who often perform data transmission. The external device of the card reader in the embodiment of the present invention can automatically transmit data in the memory card to the data receiving apparatus and improve the experience of the users. Moreover, with the embodiment of the present invention, it is unnecessary to modify the existing card reader, and it is only necessary to provide an external device between the card reader and the data receiving apparatus without increasing too much costs.

### Embodiment 2

The second embodiment of the present invention has provided an external device 1 of a card reader, and its architecture is shown in FIG. 2, which comprises:

a first interface module 11, configured to connect with a data transmission interface of the card reader 2; wherein the first interface module 11 may be a USB plug socket, which can also be called as a USB female socket; a second interface module 12, configured to connect with the data receiving apparatus 3; the second interface module 12 may be a USB plug, which is also called as a USB male plug. Most of the existing card readers connect with the data receiving apparatus 3 according to the USB plug; while the external device of the present invention is provided between the card reader and the data receiving apparatus, and thus the first interface module 11 connected with the card reader is designed as a USB plug socket to connect with the USB plug of the card reader 2. The second interface module 12 connected with the data receiving apparatus 3 can also be designed as a USB plug to connect with the USB plug of the data receiving apparatus 3. Certainly, the first interface module and the second interface module both may be provided as interfaces of other forms. The embodiment of the present invention is not limited in this respect.

The external device 1 further comprises:

a control module 13, the control module 13 is electrically connected with the first interface module 11 and the second interface module 12 respectively, to read data of the memory card of the data reader 2 according to the first interface module 11, and to transmit the data to the data receiving apparatus 3 according to the second interface module 12.

As shown in FIG. 2, the external device 1 is also provided with a trigger module 14. The trigger module 14 is electrically connected with the control module 13, configured to transmit trigger signals to the control module 13. When the control module 13 receiving a trigger signal of the trigger module 14, the control module 13 reads data of the memory card of the card reader 2 and transmits the data to the data receiving apparatus 3. In this way, the control module 13 may be triggered according to the trigger module 14 to perform data transmission, and it does not need to transmit data by manual operation. Thus, the use complexity by the user may be reduced, and the user experience may be improved.

The trigger module 14 may employ a plurality of kinds of architectures.

For example, the trigger module 14 may employ an electronic architecture. The existing USB plug has four buses, which are power supply bus VBUS, data transmission buses D+ and D-, and ground bus GND, respectively. When the second interface module 12 uses a USB plug, the trigger architecture 14 may be a voltage detection circuit in conduction with the power supply bus VBUS. When the second interface module 12 is accessed to the data receiving apparatus 3, the VBUS of the USB plug socket of the data receiving apparatus 3 will be in conduction with the VBUS of the second interface module 12 to supply power to the external device 1 and the card reader 2. Therefore, when the USB plug of the second interface module 12 is inserted to the USB plug socket of the data receiving apparatus 3, a high level will be detected on VBUS bus of the USB plug of the second interface module 12. The trigger module 14 issues a trigger signal when detecting a high level. When the control module 13 receiving the trigger signal, the control module 13 reads data of the memory card of the card reader 2, and transmits the data to the data receiving apparatus 3.

In this manner, the external device of the embodiment of the present invention, once inserted into the data receiving apparatus 3, will automatically transmit data in the memory card in the card reader 2 to the data receiving apparatus 3.

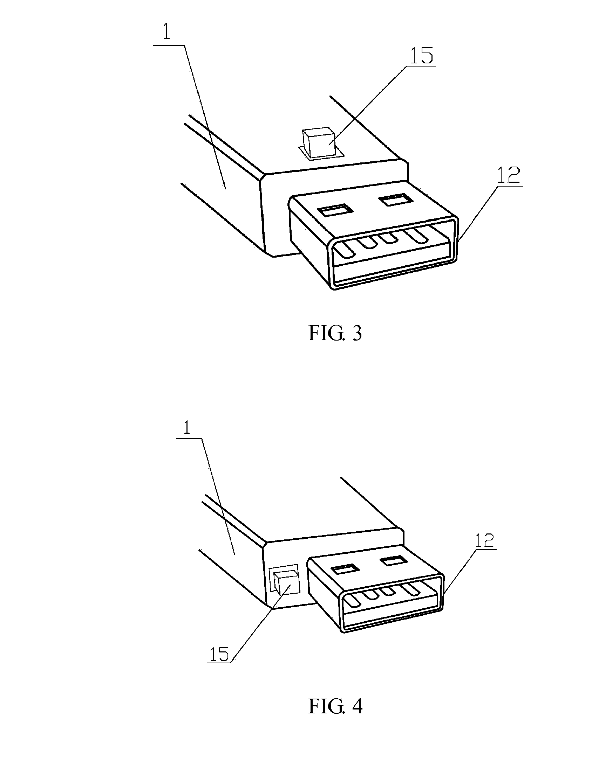

For another instance, the trigger module 14 may employ a mechanical architecture. That is, as shown in FIG. 3, the trigger module 14 may be a button 15 which protrudes from an upper surface of a housing of the external device 1. When data need to be transmitted, the button 15 is pressed manually, i.e., a trigger signal is issued. As such, data transmission may be triggered manually, to transmit data to the data receiving apparatus 3 as needed by the user. Certainly, the button 15 may be located at a lower surface, left or right surfaces, or front or back surfaces of the housing. There is no restriction to the surface where the button is located.

Alternatively, as shown in FIG. 4, the button 15 is provided in the same direction as the USB plug, and extends beyond the housing of the card reader 2 along the extending direction of the USB plug. In this manner, when the USB plug is inserted into the data receiving apparatus 3, a side wall of the data receiving apparatus 3 will press the button 15 and issue a trigger signal. As such, data may be automatically transmitted to the data receiving apparatus 3 when the external device 1 is inserted into the data receiving apparatus 3.

The data receiving apparatus 3 may be a computer, and the computer has a preset client therein to determine a path of data storage. As such, the external device 1, once inserted into the data receiving apparatus 3, will automatically store data of the memory card of the card reader 2 in a predetermined directory of the data receiving apparatus 3. The data receiving apparatus 3 may be equipments that can access to a network, such as a modem, a mobile terminal, a high definition player, a digital set top box, a home gateway, etc. The external device, once inserted into the data receiving apparatus 3, will automatically store data of the memory card of the card reader 2 into a preset network server address, such as a network album, a network hard disk, and the like.

In the present embodiment, the control module may either be provided within the card reader or within the external device of the card reader. When the control module is provided within the external device of the card reader, it is communicatively connected with the card reader and the data receiving apparatus respectively according to the external device, and transmits data of the memory card of the card reader to the data receiving apparatus. When the control module is provided within the card reader, i.e., the existing card reader is improved, and then is communicatively connected with the data receiving apparatus. In this case, the external device is not needed, but the card reader is communicatively connected with the data receiving apparatus directly, and the card reader transmits the data of the memory card to the data receiving apparatus.

### Embodiment 3

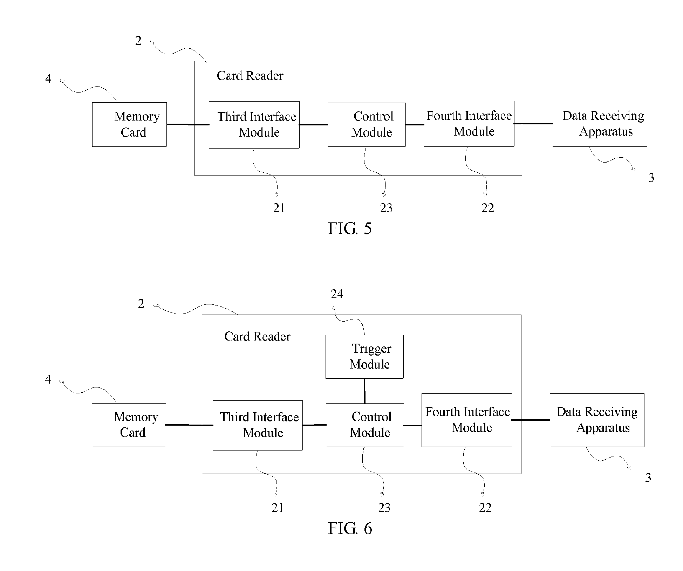

The third embodiment of the present invention has provided a card reader 2, and its architecture is as shown in FIG. 5. The card reader 2 is communicatively connected with a memory card 4 and a data receiving apparatus 3, the external device 2 comprises:
a third interface module 21, configured to connect with the memory card 4;
a fourth interface module 22, configured to connect with the data receiving apparatus 3;
a control module 23, the control module 23 is electrically connected with the third interface module 21 and the fourth interface module 22 respectively, to read data stored in the memory card 4 according to the third interface module 21, and to transmit the data to the data receiving apparatus 3 according to the fourth interface module 22. In this embodiment, the memory card 4 may be inserted in the card reader 2.

The card reader in the embodiment of the present invention transmits data in the memory card to the data receiving apparatus according to the control module. The card reader in the prior art only has a simple connection function, and thus data transmission has to be controlled by the user according to a computer, resulting in a bad experience for those users who are unfamiliar with the computer and those users who often perform data transmission. The card reader in the embodiment of the present invention can automatically transmit data in the memory card to the data receiving apparatus and improve the user experience. Moreover, the embodiment of the present invention may be obtained by only making small improvements to the existing card reader, and it has a simple and reasonable architecture.

### Embodiment 4

The fourth embodiment of the present invention has provided a card reader 2, and its architecture is shown in FIG. 6, which comprises:

a third interface module 21, configured to connect with a memory card 4; wherein the third interface module 21 may be a architecture, configured to the memory card 4 to connect with the memory card 4; a fourth interface module 22, configured to connect with the data receiving apparatus 3; wherein the fourth interface module 22 may be a USB plug, which is also called as a USB male plug. Most of the existing card readers connect with the data receiving apparatus 3 according to the USB plug; thus, the embodiment of the present invention also uses the USB plug as an example for illustration. Certainly, the third interface module and the fourth interface module both may be provided as interfaces of other forms. There is no restriction to the embodiment of the present invention in this respect.

The card reader 2 further comprises:

a control module 23, the control module 23 is electrically connected with the third interface module 21 and the fourth interface module 22 respectively, to read data stored in the memory card 4 according to the third interface module 21, and transmit the data to the data receiving apparatus 3 according to the fourth interface module 22.

As shown in Figure 6, the card reader 2 is also provided with a trigger module 24. The trigger module 24 is electrically connected with the control module 23 for transmitting trigger signals to the control module 23. Upon receiving a trigger signal of the trigger module 24, the control module 23 reads data in the memory card 4 and transmits the data to the data receiving apparatus 3. In this way, the control module 23 may be triggered according to the trigger module 24 to perform data transmission, eliminating a requirement for manual data transmission. Thus, the use complexity by the user may be reduced, and the user experience may be improved.

The trigger module 24 may employ a plurality of kinds of architectures.

For example, the trigger module 24 may employ an electronic architecture. The existing USB plug has four buses, which are power supply bus VBUS, data transmission buses D+ and D-, and ground bus GND, respectively. When the fourth interface module 22 uses a USB plug, the trigger architecture 24 may be a voltage detection circuit in conduction with the power supply bus VBUS. When the fourth interface module 22 is accessed to the data receiving apparatus 3, the VBUS bus of the USB plug socket of the data receiving apparatus 3 will be in conduction with the VBUS bus of the fourth interface module 22 to supply power to the card reader 2. Therefore, when the USB plug of the fourth interface module 22 is inserted to the USB plug socket of the data receiving apparatus 3, a high level will be detected on VBUS bus of the USB plug of the fourth interface module 22. The trigger module 24 issues a trigger signal when detecting a high level. Upon receiving the trigger signal, the control module 23 reads data of the memory card 4 of the card reader 2, and transmits the data to the data receiving apparatus 3.

In this manner, the card reader 2 of the embodiment of the present invention, once inserted into the data receiving apparatus 3, will automatically transmit data of the memory card 4 of the card reader 2 to the data receiving apparatus 3.

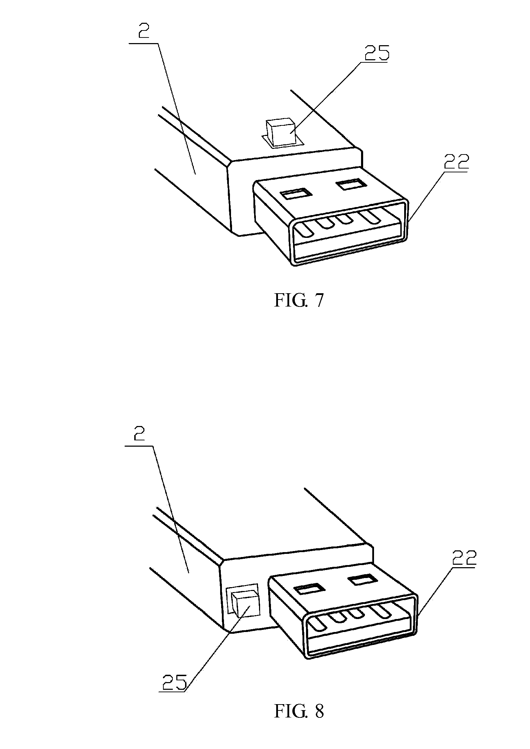

For another instance, the trigger module 24 may employ a mechanical architecture. That is, as shown in FIG. 7, the trigger module 24 may be a button 25 which protrudes from an upper surface of a housing of the card reader 2. When data need to be transmitted, the button 25 is pressed manually, i.e., a trigger signal is issued. As such, data transmission may be triggered manually to transmit data to the data receiving apparatus 3 as needed by the user. Certainly, the button 25 may be located at a lower surface, left or right surfaces, or front or back surfaces of the housing. There is no restriction to the surface where the button is located.

Alternatively, as shown in FIG. 8, the button 25 is provided in the same direction as the USB plug, and extends beyond the housing of the card reader 2 along the extending direction of the USB plug. In this manner, when the USB plug is inserted into the data receiving apparatus 3, a side wall of the data receiving apparatus 3 will press the button 25 and issue a trigger signal. As such, data may be automatically transmitted to the data receiving apparatus 3 when the card reader 2 is inserted into the data receiving apparatus 3.

The data receiving apparatus 3 may be a computer, and the computer has a preset client therein to determine a path of data storage. As such, the USB plug of the card reader 2, once inserted into the data receiving apparatus 3, the data of the memory card 4 of the card reader 2 will be automatically stored in a predetermined directory of the data receiving apparatus 3. The data receiving apparatus 3 may be equipments that can access to a network, such as a modem, a mobile terminal, a high definition player, a digital set top box, a home gateway, etc. The card reader, once inserted into the data receiving apparatus 3, will automatically store data of the memory card 4 of the card reader 2 into a preset network server address, such as a network album, a network hard disk, and the like.

As may be seen from the above embodiments, the external device of the card reader and the card reader in the embodiments of the present invention transmit data in the memory card to the data receiving apparatus according to the control module. The control module may be provided either within the card reader or within the external device of the card reader. The external device of the card reader may be arranged between the card reader and the data receiving apparatus. The card reader in the prior art only has a simple connection function, and thus the user has to control data transmission according to the computer, resulting a bad experience for those users who are unfamiliar with the computer and those users who often perform data transmission. The external device of the card reader and the card reader in the embodiments of the present invention can automatically transmit data in the memory card to the data receiving apparatus and can improve user experience. Moreover, the embodiments of the present invention may be obtained by improving the existing card reader and the external device without increasing too much cost.

Meanwhile, the external device of the card reader or the card reader may be provided with a trigger module to trigger the control module to perform data transmission. In this way, the control module may be triggered according to the trigger module to perform data transmission, and it does not need to transmit data by manual operation. Thus, the use complexity by the user may be reduced, and the user experience may be improved.

The trigger module may be a voltage detection circuit to trigger the control module according to a voltage of the USB plug. In this manner, the card reader in the embodiments of the present invention, once inserted into the data receiving apparatus, will automatically transmit data of the memory card of the card reader to the data receiving apparatus. The trigger module can also be a button which may be arranged on an upper surface of the external device or the card reader. The user can press the button to perform data transmission. The button may be provided in the same direction as the USB plug, and extends beyond the housing of the card reader along the extending direction of the USB plug. In this manner, when the USB plug is inserted into the data receiving apparatus, a side wall of the data receiving apparatus will press the button and issue a trigger signal. As such, data may be automatically transmitted to the data receiving apparatus when the external device is inserted into the data receiving apparatus.

The sequence numbers for above embodiments of the present invention are merely for description, which do not imply the priorities of the embodiments.

It is apparent for those skilled in the art that the embodiments of the present invention may be realized by means of software in combination with a necessary general hardware platform. Based on such an understanding, the essence of the technical solutions of the embodiments of the present invention or the contribution to the prior art may be embodied in a form of software product. The computer software product may be stored in a storage medium such as a ROM/RAM, a magnetic disk, a CD, etc., comprising several instructions to make a computer device (which may be a personal computer, a server, or a network device, etc.) perform the method described in respective embodiments or some part of the embodiments of the present invention.

The above specific embodiments are not used to limit the present invention. For a person of ordinary skill in the art, any amendments, equivalent substitutions, and improvements should be included in the scope of protection of the present invention without departing from the principle of the present invention.

## Claims

1. An external device of a card reader, wherein the external device is communicatively connected with the card reader and a data receiving apparatus respectively, the external device comprising:
a first interface module, configured to connect with a data transmission interface of the card reader;
a second interface module, configured to connect with the data receiving apparatus;
a control module, electrically connected with the first interface module and the second interface module respectively, to read data of a memory card of the data reader through the first interface module, and to transmit the data to the data receiving apparatus through the second interface module.

2. The external device of the card reader according to Claim 1, wherein the external device of the card reader further comprises:
a trigger module, electrically connected with the control module, configured to transmit a trigger signal to the control module;
wherein the control module is further configured to read data of the memory card of the card reader when receiving the trigger signal of the trigger module, and transmit the data to the data receiving apparatus.

3. The external device of the card reader according to Claim 2, wherein the trigger module is a button arranged on a surface of the external device, and is further configured to issue a trigger signal when the button is pressed.

4. The external device of the card reader according to Claim 1, wherein the first interface module is a USB plug socket, and the second interface module is a USB plug.

5. The external device of the card reader according to Claim 4, wherein the external device of the card reader further comprises a trigger module, the trigger module being a voltage detection circuit electrically connected with a power supply bus of the USB plug and being configured to issue a trigger signal when detecting that the power supply bus is connected to a high level.

6. A card reader communicatively connected with a memory card and a data receiving apparatus respectively, wherein the card reader comprising:
a third interface module, configured to connect with the memory card;
a fourth interface module, configured to connect with the data receiving apparatus;
wherein the card reader further comprises:
a control module being electrically connected with the third interface module and the fourth interface module respectively, to read data stored in the memory card through the third interface module, and to transmit the data to the data receiving apparatus through the fourth interface module.

7. The card reader according to Claim 6, wherein the card reader further comprises:
a trigger module, electrically connected with a control module, and configured to transmit a trigger signal to the control module;
wherein the control module is further configured to read data of the memory card of the card reader when receiving the trigger signal of the trigger module, and transmit the data to the data receiving apparatus.

8. The card reader according to Claim 7, wherein the trigger module is a button and is further configured to issue a trigger signal when the button is pressed.

9. The card reader according to Claim 6, wherein the third interface module is a USB plug socket, and the fourth interface module is a USB plug.

10. The card reader according to Claim 9, wherein the card reader further comprises a trigger module, the trigger module being a voltage detection circuit electrically connected with a power supply bus of the USB plug and configured to issue a trigger signal when detecting that the power supply bus is connected to a high level.
